# EUROPEAN PATENT SPECIFICATION

(11) **EP 4 676 721 B1**
(45) Date of publication and mention of the grant of the patent: **17.06.2026**
(21) Application number: 24709462.6
(22) Date of filing: 11.03.2024
(51) Int. Cl.: B29C 65/48, B29C 70/48, B29C 70/08, B32B 7/12, C09J 7/10, C09J 11/00, B29C 70/54, B33Y 80/00, C09J 7/22, C09J 5/06

(54) **FILM FOR JOINING PARTS**
FOLIE ZUM VERBINDEN VON TEILEN
FILM POUR ASSEMBLER DES PIÈCES

(30) Priority: 10.03.2023 EP 23161330
(43) Date of publication of application: 14.01.2026
(73) Proprietor: Université catholique de Louvain, 1348 Louvain-la-Neuve (BE)
(72) Inventor: VAN INNIS, Charline, 1348 Louvain-la-Neuve (BE); PARDOEN, Thomas, 1348 Louvain-la-Neuve (BE)
(74) Representative: den Braber, Gérard Paul
(86) International application number: PCT/EP2024/056443
(87) International publication number: WO 2024/188977

(56) References cited:
- CN-U- 218 513 464
- US-A1- 2015 360 396
- US-A1- 2020 139 488

## Description

### FIELD OF THE INVENTION

An aspect of the invention relates to a film to be applied as an intermediate between two parts to be joined, at least one of which comprises a fiber structure. The two parts that are joined using the film as the intermediate may form or be part of a composite-based structure. This composite-based structure may then constitute a component of a larger structure, such as, for example, a wing, or a part thereof, of an aircraft. Other aspects of the invention relate to a method of joining two parts using a film as an intermediate between the two parts, and a composite-based structure comprising two parts that have been joined with a film as an intermediate between the two parts.

### BACKGROUND ART

Composite materials that comprise a fiber structure generally have a relative high strength-to-weight ratio and a relatively high stiffness-to-weight ratio. This makes these fiber-reinforced composite materials particularly suited to produce structures that need to be stress-resistant, yet lightweight. Aircraft components are an example of such structures.

An element made of fiber-reinforced composite material is generally produced in a liquid composite molding process. Basically, a fiber structure is placed in a mold, which is then closed. A curable liquid is injected in the mold. The curable liquid impregnates and envelopes the fiber structure in the mold. The curable liquid is subsequently cured by heating the mold. Once sufficiently cooled, the mold may be opened and the element made of fiber-based composite material that has formed therein may be taken out.

A composite-based structure may be formed by joining several parts, at least one of which comprises a fiber structure. For example, a composite-based structure may be formed by joining a part made of fiber-reinforced composite material and another part. The other part may also be made of fiber-reinforced composite material too. Alternatively, the other part may be of a different nature, such as, for example, a metal part.

There are several basic techniques for joining two parts to form a composite-based structure. One technique consist in joining two parts with fastening elements, such as, for example, bolts and nuts, or rivets, or a combination of these. However, this technique is relatively laborious and, therefore, time consuming. Bores need to be made in the two parts, generally with great precision. Moreover, these bores constitute structural discontinuities, which may weaken the two parts, making these less stress and crack resistant. This is particularly the case for a part that is made of fiber-reinforced composite material.

Another technique consists in joining two parts with adhesive bonding. An adhesive intermediate is applied between the two parts to be joined. Accordingly, no structural discontinuities need to be introduced, which may weaken the two parts to be joined as discusses hereinbefore. However, adhesive bonding may also be relatively laborious and, therefore, time consuming. A specific surface treatment of the two parts is generally required to achieve an acceptable bonding quality. Furthermore, the adhesive intermediate needs to be cured, which constitutes a second curing following a first curing required to produce the part made of fiber-reinforced composite material. This second curing introduces production delay. Moreover, the curing of the adhesive intermediate generally needs to take place in a relatively clean and temperature-controlled environment.

Nevertheless, even if adhesive bonding is carried out in a careful, well-controlled manner, the composite-based structure obtained thereby may be insufficiently stress resistant. Cracks may form, in particular in a bond layer formed by curing the adhesive intermediate, or at an interface between the bond layer and one of the two parts. These cracks may then propagate causing structural failure. Fracture toughness expresses a critical degree of loading at which structural failure occurs due to cracks. Fracture toughness is an important performance factor.

Yet another technique consists in joining two parts in the liquid composite molding process described hereinbefore. That is, the two parts are joined while producing the one that is fiber reinforced, or while producing both parts in case these are both fiber-reinforced. In case both parts are fiber reinforced, two fiber structures are placed in the mold, one for producing one of the two fiber-reinforced parts, the other fiber structure for producing the other fiber-reinforced part. In case only one of the two parts is fiber reinforced, a single fiber structure is placed in the mold together with the other part, which is not fiber reinforced. In both cases, the two parts are joined by a bond layer formed by curing the curable liquid between these. This technique is therefore commonly referred to as co-curing.

Co-curing qualifies as the least laborious and time-consuming of the techniques discussed hereinbefore. However, a composite-based structure obtained by co-curing is generally significantly weaker than that obtained by the other techniques. Specifically, the bond layer formed by curing the curable liquid is significantly more brittle than an adhesive bond, typically characterized by a fracture toughness lower by an order of magnitude. This is generally the case even if a high-performance epoxy resin is used as the curable liquid in the co-curing technique. Co-coring thus potentially suffers from a lower fracture toughness compared with adhesive bonding.

There have been attempts to enhance the stress resistance, in particular the fracture toughness, of bonded composite-based structures. Most of these attempts seek improving adhesive bonding of two parts. Patent publication US 2022/0363015 A1 describes such an attempt. A corrugated structure is placed between two carbon fiber reinforced polymer panels. An adhesive is placed between the two carbon fiber reinforced polymer panels and in contact with the corrugated structure. The corrugated structure has a shape defined by a given wavelength λ.

Patent publication US2015360396A1 relates to the formation of a radius filler. A lattice is formed of connecting elongate members having a three-dimensional shape of the radius filler. A resin is placed within the lattice.

Utility model publication CN218513464U relates to photovoltaic adhesive films, in particular to an embossed adhesive film for a circular solder strip. The adhesive film comprises trapezoidal groove embossments arranged at intervals on its longitudinal surface. The embossments comprise short-side trapezoidal grooves arranged on the longitudinal lower surface of the adhesive film.

Patent publication US2020139488A1 relates to the production of riblets. The riblets are introduced by means of laser interference structuring, or direct laser interference patterning; in particular into an already coated and cured surface. An aircraft component may have the riblets produced in this way.

### SUMMARY OF THE INVENTION

There is a need for a technique that allows joining two parts to form a composite-based structure having a fracture toughness that is relatively high.

One aspect of the invention provides for a film as defined in claim 1.

Another aspect of the invention provides for a method of joining two parts as defined in claim 13.

Yet another aspect of the invention provides for a composite-based structure as defined in claim 15.

In each of these aspects, the film is included in a bond layer formed by curing the curable liquid between the two parts. The film provides a synergistic effect of several crack-inhibiting mechanisms, which may include plastic dissipation, crack deflection, crack branching, and crack arresting. Each of these mechanisms may dampen an internal driving force capable of causing crack propagation, making that a greater external force is required for crack propagation. This driving force dampening may be amplified by the synergistic effect. Specifically, the film by itself may provide plastic dissipation. A cavity in the film may provide crack deflection and crack arresting.

The film thus makes the bond layer significantly more resistant to crack propagation compared with a plain bond layer, which does not include the film. Consequently, a composite-based structure that is formed using the film in accordance with the invention, may have a fracture toughness that is relatively high. The fracture toughness may be as high as that of a comparable composite-based structure formed by adhesive bonding. The facture toughness may even be higher when a suitable selection of cavities are filled with the curable liquid during the liquid composite molding process, whereas other cavities remain empty.

What is more, the invention allows achieving a relatively high fracture toughness in an economical manner. This is because the co-curing technique may be used to form a composite-based structure. A single curing operation is sufficient to form a fiber-reinforced part while making that this part is joined to another part thus forming the composite-based structure. This saves time and effort.

For the purpose of illustration, some embodiments of the invention are described in detail with reference to accompanying drawings. In this description, additional features will be presented, some of which are defined in the dependent claims, and advantages will be apparent.

### BRIEF DESCRIPTION OF THE DRAWINGS

FIG. 1 is a schematic perspective view of a film to be used as an intermediate between two parts to be joined in a liquid composite molding process.
FIG. 2 is a schematic cross-sectional view of the film.
FIG. 3 is a schematic top view of the film with an orthographic projection of a plurality of cavities onto a top surface of the film.
FIG. 4 is a schematic diagram of a method of joining two parts in a liquid composite molding process in which the film is applied.
FIG. 5 is a schematic cross-sectional view of a composite-based structure obtained by joining two parts in accordance with the method illustrated in FIG. 4.
FIG. 6 is the schematic cross-sectional view of the composite-based structure with a schematic representation of a first regime of crack propagation.
FIG. 7 is the schematic cross-sectional view of the composite-based structure with a schematic representation of a second regime of crack propagation.
FIG. 8 is the schematic cross-sectional view of the composite-based structure with a schematic representation of a third regime of crack propagation.

### DESCRIPTION OF SOME EMBODIMENTS

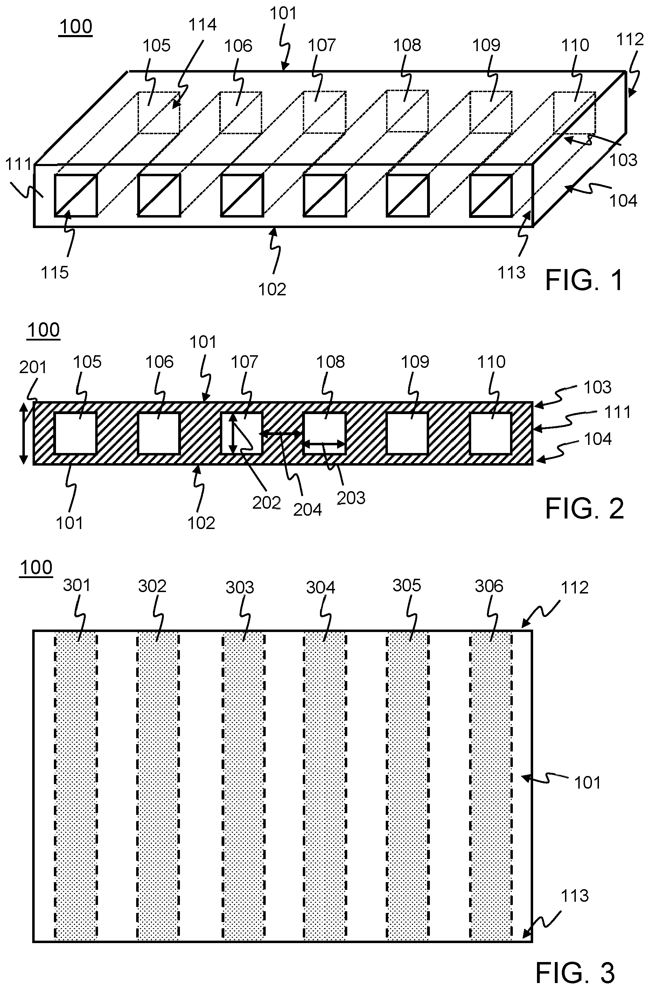

FIGS. 1, 2 and 3 schematically illustrate an embodiment of a film 100 to be used as an intermediate between two parts to be joined in a liquid composite molding process. FIG. 1 provides a schematic perspective view of this embodiment, which will be referred to hereinafter as the film 100 for the sake of ease of reading. FIG. 2 provides a schematic cross-sectional view of the film 100. FIG. 3 provides a schematic top view of the film 100 with an orthographic projection that will be described hereinafter.

The film 100 has two main surfaces 101, 102, which are inherently substantially parallel due to the film being a relatively thin sheet. One of the two main surfaces 101, 102 will be referred to as top surface 101 for the sake of ease of reading. The other main surface will be referred to as bottom surface 102. The top surface 101 of the film 100 may contact one of the two parts to be joined. Likewise, the bottom surface 102 may contact the other one of the two parts to be joined. The film 100 comprises two surface layers 103, 104, one of which 103 extends inwardly from the top surface 101, the other surface layer 104 extending inwardly from the bottom surface 102.

The film 100 comprises a plurality of cavities 105-110. For the sake of simplicity, the drawings show 6 cavities only, whereas the film may actually comprise more cavities, tens, hundreds, or thousands of cavities, or even more. The cavities 105-110 are located in a volume 111 between the two surface layers 103, 104 of the film 100. In this embodiment, the plurality of cavities 105-110 are in the form of channels and will therefore be referred to hereinafter as the channels 105-110. The channels 105-110 are transversally oriented extending between two longitudinal edges 112, 113 of the film 100, which are opposite to each other.

In FIG. 3, the channels 105-110 are represented as stripes 301-306 with a dotted filling delimited by dashed lines. These stripes 301-306 correspond to the orthographic projection of the channels 105-110 onto the top surface 101 as a projection plane. In this embodiment, this orthographic projection of the channels 105-110 occupies about 50% of the top surface 101. A similar percentage is obtained for an orthographic projection of the channels 105-110 onto the bottom surface 102 as the projection plane. In other embodiments, an orthographic projection of channels or, more generally, cavities onto one of the two main surfaces may occupy at least 5 %, or at least 10%, or at least 20%, or at least 30%, or at least 40% of the main surface that constitutes the projection plane. Higher percentages are also possible. This generally implies that the channels account for a non-negligible portion of the volume 111 between the two surface layers 103, 104.

In this embodiment, at least some of the channels 105-110 are open. All the channels 105-110 may be open. A channel 105 that is open may have two open ends 114, 115, one open end 114 at one 112 of the two longitudinal edges 112, 113 of the film 100, the other open end 115 at the other longitudinal edge 113. The channels 105-110 are regularly spaced. The channels 105-110 may be individually closable. Accordingly, some of the channels 105-110 that are open, or even all these channels 105-110, may individually be transformed into closed channels.

The film 100 may have a thickness 201 between 0.1 and 10 mm. More specifically, the thickness 201 may be between 0.5 mm and 5 mm. Even more specifically, the thickness 201 of the film 100 may be between 1 mm and 2 mm. Tests have been made where the film 100 was about 1.4 mm thick.

The channels 105-110 may have a height 202 between 25% and 90% of the thickness 201 of the film 100. Other suitable ranges for the height 202 relative to the thickness 201 may be between 30% and 85%, or between 35% and 80%, or between 40% and 75%. In the tests where the film 100 was about 1.4 mm thick, the height 202 of the channels 105-110 was about 1 mm.

The channels 105-110 may have a width 203 between 25% and 1000 % of the thickness 201 of the film 100. Other suitable ranges for the width 203 relative to the thickness 201 may be between 30% and 500%, or between 40% and 300%, or between 50% and 150%. In certain embodiments, the width 203 of at least one of the channel 105-100 may thus be larger than the thickness 201 of the film 100. A suitable channel width may depend on a fracture process zone, which in turn depends on the thickness 201 of the film 100 and its properties. In the aforementioned tests, the channels 105-110 were about 1.2 mm wide.

The channels 105-110 are spaced from each other at a distance between 50% and 1000% of their width 203. Other suitable ranges for a channel spacing 204 relative to the thickness 201 may be between 50% and 500%, or between 50% and 300%, or between 50% and 200%. In certain embodiments, the channel spacing 204 may thus be larger than the width of the channels 105-110. Fracture toughness may vary with the channel spacing 204, which may also determine the mechanism that is most susceptible to cause fracture. For example, if all the channels 105-110 are filled with resin, a relatively small channel spacing may result in higher stress triaxiality ahead of a crack tip and lower fracture toughness. Hence, a larger channel spacing may be preferred. Conversely, if all the channels 105-110 are left empty after resin injection, it may be preferable to have a relatively small channel spacing. This will result in slender channel walls akin to slender pillars between the two surface layers 103, 104 of the film 100. It has been found that these slender pillars result in a relatively high failure load due to better stress redistribution. In the aforementioned tests, the channel spacing 204 was about 1 mm between two adjacent channels throughout the channels 105-110.

The film 100 may comprise a thermoplastic. The thermoplastic may comprise polyamide PA also referred to as Nylon. Other suitable thermoplastic materials include polyetherimide PEI, polysulfone PSU, polyethersulfone PES, polyphenylene oxide PPO, polyétherimide PEO, polymethyl methacrylate PMMA, phenoxy, polyvinylpyrrolidone PVP, polyetheretherketone PEEK, polycarbonate PC, polyethylene PE, polyethylene terephthalate PET, polycaprolactone PCL unsaturated polyesters, and acrylates. The film 100 may exclusively comprise one of the aforementioned thermoplastic materials, as well as any combination of these.

The film 100 may be manufactured using, for example, a 3D printer. In an experimental set up, the film 100 was manufactured using a 3D printer commercialized under the designation Mark Two, Mark Two being a trademark of the Markforged Corporation, US. This 3D printer was fed with a nylon material commercialized under the designation Nylon White, Nylon White being a trademark of the Markforged Corporation, US. The 3D printer was set to produce a layer height of about 100 µm.

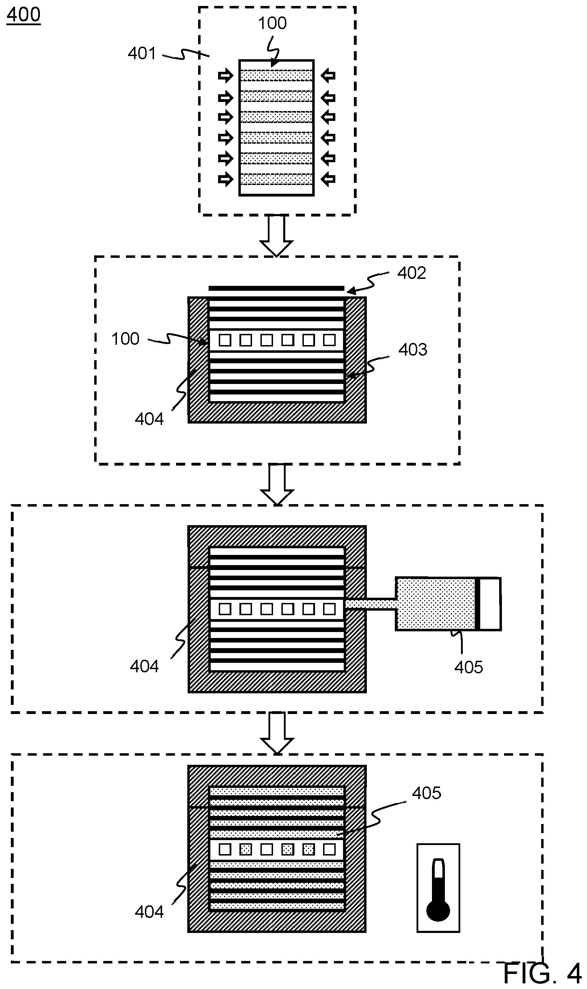

FIG. 4 schematically illustrates a method of joining two parts in a liquid composite molding process. The film 100 discussed hereinbefore with reference to FIGS. 1, 2 and 3 is applied in this method. Other embodiments of the film may equally be applied. The two parts that are joined by means of the method illustrated in FIG. 4 may form a composite-based structure. This composite-based structure may serve as a component of a larger structure, such as, for example, a wing, or a part thereof, of an aircraft.

The method illustrated in FIG. 4 is an example among other possible methods. In this example, the two parts that are joined each comprise a fiber structure. In tests, several plies of H5 satin fabric made of carbon fibers each were used, commercially available under the designation HexForce G0926, HexForce being a registered trademark of Hexcel Corporation, US. Alternatively, only one of the two parts may comprise a fiber structure. The other part may be, for example, an object that is substantially made of metal. In this case too, the film 100 may be applied as an intermediate between the two parts to be joined.

The film 100 may optionally undergo a customization treatment 401 prior to its use in the liquid composite molding process. The customization treatment 401 may include closing some of the channels 105-110 that are open, or even closing all the channels 105-110 that are open. To that end, each open end of a channel may be sealed. The open end of a channel may be sealed by means of, for example, welding, or any other suitable technique. A template may be used that defines a set of channels to be closed and another set of channels to remain open. Such a template may comprise, for example, two arrays of weld heads spaced at a distance corresponding to that between the two longitudinal edges 112, 113 of the film 100. The two arrays may have a similar pattern corresponding to that of the channels to be closed.

The method basically comprises the following operations. Two separate fiber structures 402, 403 are placed in a mold 404. The film 100 discussed hereinbefore is placed between the two separate fiber structures 402, 403 as an intermediate between these. This film may be the film 100 illustrated in FIGS. 1, 2 and 3 or a customized version thereof as discussed hereinbefore. Once the two separate fiber structures 402, 403 and the film 100 have been placed in the mold 404, the mold 404 is closed. The mold 404 is pressurized making that a pressure inside the mold 404 is well above atmospheric pressure. The pressure in the mold 404 may be, for example, 7 bar.

A curable liquid 405 is injected into the mold 404. The curable liquid 405 may be, for example, a resin and, more specifically, an epoxy resin. The curable liquid 405 will be referred to hereinafter as the resin 405 for the sake of easy of reading. In the aforementioned tests, the method has been carried out using epoxy resin commercially available under the designation Hex Flow RTM6, Hex Flow being a registered trademark of Hexcel Corporation, US. In the tests, the resin 405 was injected at a temperature of about 90°C. The mold 404 was kept pressurized at about 6 bar.

The resin 405 that is injected into the mold 404 may enter into the channels of the film 100 that are open. These channels will thus be filled with the resin 405. Conversely, the resin 405 is prevented from entering into the channels that are closed, if there are any such channels. For the rest, the resin 405 enters a section of the mold 404 where the one of the two separate fiber structures 402, 403 is present, and another section where the other fiber structure is present. The two separate fiber structures 402, 403 will thus each be impregnated and enveloped by the resin 405 injected.

Once a sufficient amount of the resin 405 has been injected into the mold 404, the resin 405 inside the mold 404 is cured. This curing may involve the following operations, which have been carried out in the aforementioned tests.. The mold 404 is heated at a rate of about 2°C per minute until the temperature inside the mold 404 reaches about 160°C. This temperature is then maintained for about 90 minutes. Subsequently, the mold 404 is again heated at a rate of about 2°C per minute until the temperature inside the mold 404 reaches 180°C. After that, the mold 404 is allowed to cool down for about two hours. The composite-based structure that has formed in the mold 404 may then be extracted after the aforementioned cooling down.

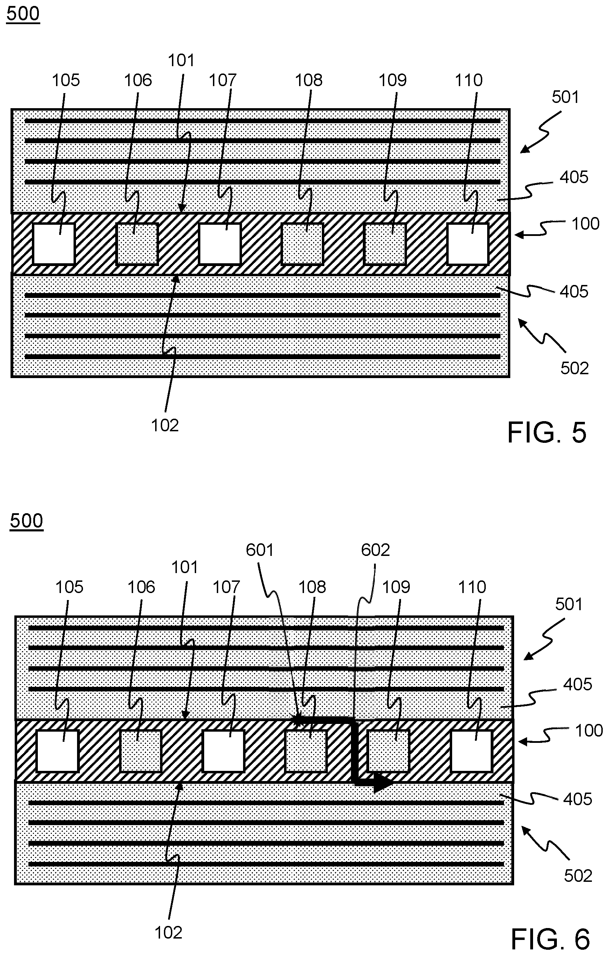

FIG. 5 schematically illustrates an embodiment 500 of a composite-based structure obtained by joining two parts 501, 502 in accordance with the method discussed hereinbefore with reference to FIG. 4. FIG. 5 provides a schematic cross-sectional view of this embodiment 500, which will be referred to hereinafter as the composite-based structure 500 for the sake of ease of reading. The two parts 501, 502 that have been joined may each comprise a fiber structure. The film 100 discussed hereinbefore with reference to FIGS. 1, 2, and 3 has been applied as an intermediate between the two parts 501, 502. The film 100 interfaces with the resin 405 that has cured at its top surface 101 and at its bottom surface 102. These interfaces will be referred to hereinafter as top interface and bottom interface, respectively, for the sake of ease of reading.

The composite-based structure 500 illustrated in FIG. 5 has been obtained by applying the customization treatment 401 discussed hereinbefore to the film 100. As a result, some of the channels 106, 108, 109 are filled with the resin 405, whereas other channels 105, 107, 10 have remained empty. In other embodiments, all the channels 105-110 may be filled with the resin 405 or, conversely, all the channels 105-110 may remain empty. The channels 105-110 of the film 100 in the composite-based structure 500 may have slighter smaller dimensions, in particular in height and width, than those of the film 100 prior to its use in the method discussed hereinbefore with reference to FIG. 4. There may thus be a slight channel shrinking effect without significant consequence.

FIG. 6 schematically illustrates a first regime of crack propagation in the composite-based structure 500 illustrated in FIG. 5. In the first regime, a crack 601 propagates following a path that comprises a section 602 through the thickness of the film 100, from the top interface to the bottom interface, as illustrated in FIG. 6, or vice versa. In this section 602, the crack propagates through film material, which has a relatively high crack resistance. Critical energy release rates above 3000 J/m² up to 5000 J/m² were measured with Nylon as the film material. These values indicate relatively high fracture toughness, which may also be obtained with other film materials mentioned hereinbefore.

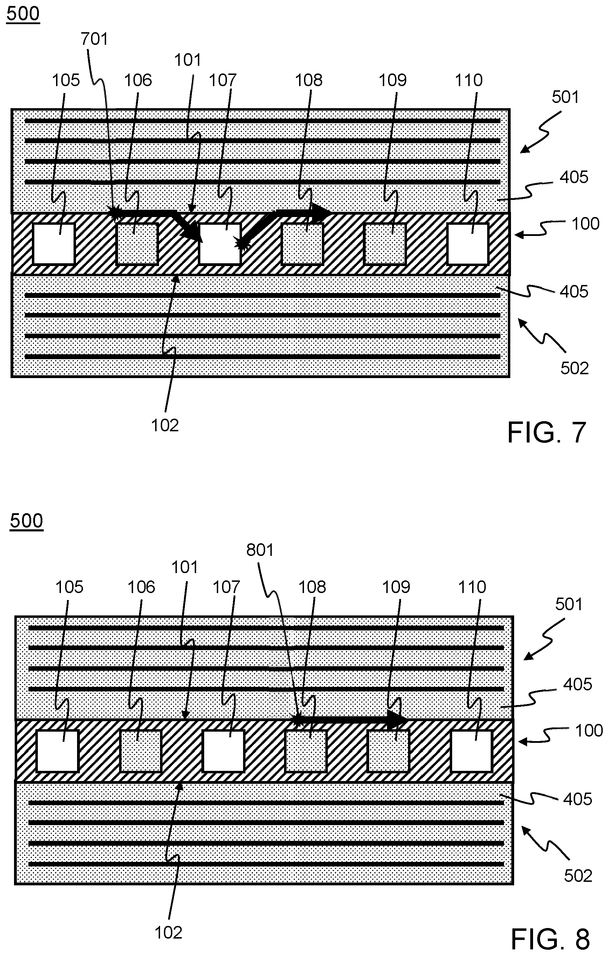

FIG. 7 schematically illustrates a second regime of crack propagation in the composite-based structure 500 illustrated in FIG. 5. In the second regime, a crack 701 propagating along the top interface or along the bottom interface is deflected towards an empty channel 107. FIG. 7 illustrates the first one of the two aforementioned cases. The crack 701 may reinitiate at an opposite side of the empty channel 107 and may then propagate back towards the top interface. This crack re-initiation is generally due to stress induced in a region above a filled channel 108 following the empty channel 107 in propagation direction. This stress may further initiate relatively small secondary cracks at the top interface in this region. The crack that has reinitiated may then join these secondary cracks.

As a result of the crack being deflected by the empty channel 107, the crack follows a path comprising a section within the film material, which has a relatively high crack resistance as mentioned hereinbefore. Critical energy release rates critical from about 1500 to about 2500 J/m² were measured and associated with the second regime of crack propagation. Although somewhat lower than the values mentioned with regard to the first regime, the values associated with the second regime also indicate relatively high fracture toughness.

FIG. 8 schematically illustrates a third regime of crack propagation in the composite-based structure 500 illustrated in FIG. 5. In the third regime, a crack 801 propagates mostly along the top interface or along the bottom interface without being deflected as described hereinbefore. This is due to the absence of an empty channel directly ahead of the crack. It has been found that plastic dissipation dominates in the third regime. Plastic dissipation is due to the film material being relatively soft compared with the resin 405 that has cured. The crack 801 dissipates a part of its energy in the film material while propagating. Critical energy release rates critical from about 600 to about 1200 J/m² were measured and associated with the first regime of crack propagation. Although somewhat lower than the values mentioned with regard to the first and second regimes, the values associated with the first regime indicate a fracture toughness that is at least comparable with those achieved with adhesive bonding.

With regard to the third regime of crack propagation, plastic dissipation was found to have a significantly greater impact on enhancing fracture toughness than stiffness variations. Stiffness variations are due to the film 100 comprising sections of filled channels 106, 108, 109 sandwiched between film material alternating with sections of film material only, or at least substantially comprised of film material. Although stiffness variations have been proposed as a technique for enhancing fracture toughness, these were thus found to be rather insignificant compared with plastic dissipation. In line with this, it was observed that the fracture toughness was higher in regions where the top interface and the bottom interface delimit the sections comprising film material compared with other regions where these interfaces delimit the sections of filled channels 106, 108, 109 being sandwiched between the film material. Namely, the first-mentioned regions are in contact with more softness, as it were, than the last-mentioned regions.

With regard to the third regime of crack propagation, it was further found that an empty channel 110 that is not directly ahead of the crack, but still relatively close ahead, may increase fracture toughness. This is because the empty channel 110 changes stress distribution within the composite-based structure 500 at the top interface and at the bottom interface compared with a situation where there is no empty channel. The empty channel 110 ahead of the crack, but not directly ahead, lowers stresses in a region where the crack 801 propagates. This lowering of stresses accounts for increased fracture toughness.

In addition to fracture toughness, shear resistance may be another performance factor to be taken into consideration. Referring to the composite-based structure 500 illustrated in FIG. 5, let it be assumed that all the channels 105-110 within the film 100 are empty. In that case, referring to FIG. 2, the volume 111 between the two surface layers 103, 104 in the film 100 will consist only of walls separating empty spaces. These walls themselves offer little resistance to shear stresses. As a result, shear resistance will be relatively low. Conversely, let it now be assumed that all the channels 105-110 within the film 100 are filled with the resin 405 that has cured. In that case, the film 100 will offer a significantly higher resistance against shear stresses. Shear resistance will be relatively high.

When applying the film 100 discussed hereinbefore with reference to FIGS. 1, 2, and 3 in joining two parts as discussed with reference to FIG. 4, a satisfactory trade-off between fracture toughness and shear resistance may be made. This can be achieved by filling an appropriate portion of the channels 105-110 with the resin 405, while leaving a remaining portion of the channels empty. Moreover, an appropriate distribution of filled channels and empty channels may contribute to making the satisfactory trade-off. Specifically, it has been found that a better distribution of shear and peel stresses may be obtained when an empty channel is located at an edge of the composite-based structure 500. Consequently, one or more empty channels at such a location may improve shear resistance.

In general, if the composite-based structure 500 is mainly subjected to tensile stresses, the film 100 may preferably comprise relatively many empty channels. Conversely, if the composite-based structure 500 is mainly subjected to shear stresses, the film 100 may preferably comprise relatively many filled channels. For example, in the latter case, 66%, even up to 100% of the channels may be filled with the resin 405 that has cured. The satisfactory trade-off between fracture toughness and shear resistance thus depends on the type of stresses the composite-based structure 500 will be subjected to. The customization treatment 401 discussed hereinbefore allows achieving the satisfactory trade-off.

### NOTES

The embodiments described hereinbefore with reference to the drawings are presented by way of illustration. The invention may be implemented in numerous different ways.

The invention may be applied in numerous types of products or methods related to composite-based structures. The embodiments presented hereinbefore concern a composite-based structure comprising two parts that have been joined. In other embodiments, composite-based structures may comprise more than two parts that have been joined in accordance with the invention. Furthermore, in the embodiments presented hereinbefore, the two parts each comprise a fiber structure. In other embodiments, only a single part may comprise a fiber structure.

There are numerous different ways of implementing a film in accordance with the invention. In the presented embodiments, cavities in the film are in the form of channels, which, in principle, may have any cross-sectional shape including, for example, a square shape, a circular shape, an elliptical shape. In other embodiments, the cavities may have a different form, such as, for example, an array of holes, which may have any shape. Furthermore, cavities need not have an identical orientation; some cavities may be oriented differently with respect to some other cavities. In the presented embodiments, the cavities in the film, which are in the form of channels, are open by default. In other embodiments, the cavities in the film may be closed by default.

The remarks made hereinbefore demonstrate that the embodiments described with reference to the drawings illustrate the invention, rather than limit the invention. The invention can be implemented in numerous alternative ways that are within the scope of the appended claims. Any reference sign in a claim should not be construed as limiting the claim. The verb "comprise" in a claim does not exclude the presence of other elements or other steps than those listed in the claim. The same applies to similar verbs such as "include" and "contain". The mention of an element in singular in a claim pertaining to a product, does not exclude that the product may comprise a plurality of such elements. Likewise, the mention of a step in singular in a claim pertaining to a method does not exclude that the method may comprise a plurality of such steps. The mere fact that respective dependent claims define respective additional features, does not exclude combinations of additional features other than those reflected in the claims.

## Claims

1. A film (100) for use as an intermediate between two parts (401, 402) to be joined in a liquid composite molding process, at least one of the two parts comprising a fiber structure, the film having two main surfaces (101, 102) one of which is adapted to contact one of the two parts to be joined, the other main surface being adapted to contact the other one of the two part to be joined, wherein the film comprises a plurality of cavities (105-110) in a volume (111) between two surface layers (103, 104) one of which extends inwardly from one of the two main surfaces, the other surface layer extending inwardly from the other one of the two main surfaces, whereby an orthographic projection (301-306) of the cavities onto one of the two main surfaces as a projection plane, occupies at least 5 % of this main surface.

2. A film according to claim 1, wherein at least some of the cavities (105-110) are open cavities and arranged to be individually closable so as to be individually transformable into closed cavities.

3. A film according to claim 1, wherein at least some the cavities (105-110) are closed cavities and arranged to be individually openable so as to be individually transformable into open cavities.

4. A film according to any of claims 1 to 3, wherein the film (100) has a thickness (201) between 0.1 and 10 mm.

5. A film according to claim 4, wherein the cavities (105-110) have a height (202) between 25% and 90% of the thickness of the film.

6. A film according to any of claims 4 and 5, wherein the cavities (105-110) have a width (203) between 25% and 1000 % of the thickness of the film.

7. A film according to any of claims 1 to 6, wherein the cavities (105-110) are regularly spaced.

8. A film according to claim 7, wherein the cavities (105-110) are spaced from each other at a distance (204) between 50% and 1000% of their width (203).

9. A film according to any of claims 1 to 8, wherein at least some of the cavities (105-110) are in the form of channels having an end (114, 115) at at least one of two opposite edges (112, 113) of the film.

10. A film according to claim 9, wherein the channels are transversally oriented extending between two longitudinal edges (112, 113) of the film, which are opposite to each other.

11. A film according to any of claims 1 to 10, wherein the film comprises a thermoplastic.

12. A film according to claim 11; wherein the thermoplastic comprises at least one of the following materials: polyamide PA also referred to as Nylon, polyetherimide PEI, polysulfone PSU, polyethersulfone PES, polyphenylene oxide PPO, polyétherimide PEO, polymethyl methacrylate PMMA, phenoxy, polyvinylpyrrolidone PVP, polyetheretherketone PEEK, polycarbonate PC, polyethylene PE, polyethylene terephthalate PET, polycaprolactone PCL unsaturated polyesters, acrylates.

13. A method of joining two parts (401, 402) in a liquid composite molding process, at least one of the two parts comprising a fiber structure, the method comprising:
- placing the two parts in a mold (404) with a film (100) according to any of claims 1 to 12 as an intermediate between the two parts;
- closing the mold;
- injecting a curable liquid (405) in the mold; and
- curing the curable liquid that has been injected in the mold.

14. A method according to claim 13 comprising prior to injecting the curable liquid (405) in the mold (404):
- processing the film (100) according to any of claims 1 to 12 so that some of the cavities (105-110) are open cavities and some other of the cavities are closed cavities.

15. A composite-based structure (500) comprising two parts that have been joined in a liquid composite molding process, at least one of the two parts comprising a fiber structure, the composite-based structure comprising a film (100) according to any of claims 1 to 12 in a bond layer between the two parts.

## Patentansprüche

1. Folie (100), die als Zwischenstück zwischen zwei Teilen (401, 402) verwendet wird, die in einem Flüssigverbundformprozess verbunden werden sollen, wobei mindestens einer der beiden Teile eine Faserstruktur umfasst, die Folie zwei Hauptoberflächen (101, 102) aufweist, von denen eine dazu ausgelegt ist, mit einem der beiden zu verbindenden Teile in Kontakt zu treten, während die andere Hauptoberfläche dazu ausgelegt ist, mit dem anderen der beiden zu verbindenden Teile in Kontakt zu treten, wobei die Folie eine Vielzahl von Hohlräumen (105-110) in einem Volumen (111) zwischen zwei Oberflächenschichten (103, 104) umfasst, von denen eine der beiden Hauptoberflächen nach innen reicht, während die andere Oberflächenschicht von der anderen der beiden Hauptoberflächen nach innen reicht, wobei eine orthografische Projektion (301-306) der Hohlräume auf eine der beiden Hauptoberflächen als Projektionsfläche mindestens 5 % dieser Hauptfläche einnimmt.

2. Folie nach Anspruch 1, wobei mindestens einige der Hohlräume (105-110) offene Hohlräume sind und so angeordnet sind, dass sie einzeln schließbar sind, um einzeln in geschlossene Hohlräume umwandelbar zu sein.

3. Folie nach Anspruch 1, wobei mindestens einige der Hohlräume (105-110) geschlossene Hohlräume sind und so angeordnet sind, dass sie einzeln geöffnet und somit einzeln in offene Hohlräume umgewandelt werden können.

4. Folie nach einem der Ansprüche 1 bis 3, wobei die Folie (100) eine Dicke (201) von 0,1 bis 10 mm aufweist.

5. Folie nach Anspruch 4, wobei die Hohlräume (105-110) eine Höhe (202) von 25 % bis 90 % der Dicke der Folie aufweisen.

6. Folie nach einem der Ansprüche 4 und 5, wobei die Hohlräume (105-110) eine Breite (203) von 25 % bis 1000 % der Dicke der Folie aufweisen.

7. Folie nach einem der Ansprüche 1 bis 6, wobei die Hohlräume (105-110) regelmäßig beabstandet sind.

8. Folie nach Anspruch 7, wobei die Hohlräume (105-110) in einem Abstand (204) von 50 % bis 1000 % ihrer Breite (203) voneinander beabstandet sind.

9. Folie nach einem der Ansprüche 1 bis 8, wobei mindestens einige der Hohlräume (105-110) die Form von Kanälen besitzen, die ein Ende (114, 115) an mindestens einer der beiden gegenüberliegenden Kanten (112, 113) der Folie aufweisen.

10. Folie nach Anspruch 9, wobei die Kanäle quer orientiert sind und sich zwischen zwei gegenüberliegenden Längskanten (112, 113) der Folie erstrecken.

11. Folie nach einem der Ansprüche 1 bis 10, wobei die Folie ein Thermoplast umfasst.

12. Folie nach Anspruch 11, wobei das Thermoplast mindestens eines der folgenden Materialien umfasst: Polyamid PA, auch als Nylon bezeichnet, Polyetherimid PEI, Polysulfon PSU, Polyethersulfon PES, Polyphenylensulfid PPO, Polyetherimid PEO, Polymethylmethacrylat PMMA, Phenoxy, Polyvinylpyrrolidon PVP, Polyetheretherketon PEEK, Polycarbonat PC, Polyethylen PE, Polyethylenterephthalat PET, Polycaprolacton PCL ungesättigte Polyester, Acrylate.

13. Verfahren zum Verbinden von zwei Teilen (401, 402) in einem Flüssigverbundformprozess, wobei mindestens einer der beiden Teile eine Faserstruktur umfasst, das Verfahren umfassend:
- Platzieren der beiden Teile in eine Form (404) mit einer Folie (100) nach einem der Ansprüche 1 bis 12 als Zwischenlage zwischen den beiden Teilen;
- Schließen der Form;
- Injizieren einer heilbaren Flüssigkeit (405) in die Form; und
- Aushärten der heilbaren Flüssigkeit, die in die Form injiziert wurde.

14. Verfahren nach Anspruch 13, umfassend vor dem Injizieren der heilbaren Flüssigkeit (405) in die Form (404):
- Verarbeiten der Folie (100) nach einem der Ansprüche 1 bis 12, sodass einige der Hohlräume (105-110) offene Hohlräume sind und einige andere der Hohlräume geschlossene Hohlräume sind.

15. Verbundstruktur (500), die zwei Teile umfasst, die in einem Flüssigverbundformprozess verbunden wurden, wobei mindestens einer der beiden Teile eine Faserstruktur umfasst, die Verbundstruktur eine Folie (100) nach einem der Ansprüche 1 bis 12 in einer Bindeschicht zwischen den beiden Teilen umfasst.

## Revendications

1. Film (100) pour utilisation comme intermédiaire entre deux parties (401, 402) à assembler dans un processus de moulage composite liquide, au moins une des deux parties comprenant une structure fibreuse, le film présentant deux surfaces principales (101, 102) dont l'une est conçue pour entrer en contact avec l'une des deux parties à assembler, l'autre surface principale étant conçue pour entrer en contact avec l'autre des deux parties à assembler, dans lequel le film comprend une pluralité de cavités (105-110) dans un volume (111) entre deux couches de surface (103, 104) dont l'une s'étend vers l'intérieur à partir de l'une des deux surfaces principales, l'autre couche de surface s'étendant vers l'intérieur à partir de l'autre des deux surfaces principales, selon lequel une projection orthographique (301-306) des cavités sur l'une des deux surfaces principales en tant que plan de projection occupe au moins 5 % de cette surface principale.

2. Film selon la revendication 1, dans lequel au moins certaines des cavités (105-110) sont des cavités ouvertes et conçues pour être individuellement fermables afin d'être individuellement transformables en cavités fermées.

3. Film selon la revendication 1, dans lequel au moins certaines des cavités (105-110) sont des cavités fermées et conçues pour être individuellement ouvrables afin d'être individuellement transformables en cavités ouvertes.

4. Film selon l'une quelconque des revendications 1 à 3, dans lequel le film (100) présente une épaisseur (201) comprise entre 0,1 et 10 mm.

5. Film selon la revendication 4, dans lequel les cavités (105-110) présentent une hauteur (202) comprise entre 25 % et 90 % de l'épaisseur du film.

6. Film selon l'une quelconque des revendications 4 et 5, dans lequel les cavités (105-110) présentent une largeur (203) comprise entre 25 % et 1000 % de l'épaisseur du film.

7. Film selon l'une quelconque des revendications 1 à 6, dans lequel les cavités (105-110) sont régulièrement espacées.

8. Film selon la revendication 7, dans lequel les cavités (105-110) sont espacées les unes des autres d'une distance (204) comprise entre 50 % et 1 000 % de leur largeur (203).

9. Film selon l'une quelconque des revendications 1 à 8, dans lequel au moins certaines des cavités (105-110) se présentent sous forme de canaux présentant une extrémité (114, 115) à au moins l'un des deux bords opposés (112, 113) du film.

10. Film selon la revendication 9, dans lequel les canaux sont orientés transversalement s'étendant entre deux bords longitudinaux (112, 113) du film, qui sont opposés l'un à l'autre.

11. Film selon l'une quelconque des revendications 1 à 10, dans lequel le film comprend un thermoplastique.

12. Film selon la revendication 11 ; dans lequel le thermoplastique comprend au moins l'un des matériaux suivants : polyamide PA également appelé Nylon, polyétherimide PEI, polysulfone PSU, polyéthersulfone PES, polyphénylène oxyde PPO, polyétherimide PEO, polyméthacrylate de méthyle PMMA, phénoxy, polyvinylpyrrolidone PVP, polyétheréthercétone PEEK, polycarbonate PC, polyéthylène PE, polyéthylène téréphtalate PET, polycaprolactone PCL, polyesters insaturés, acrylates.

13. Procédé d'assemblage de deux parties (401, 402) dans un processus de moulage composite liquide, au moins l'une des deux parties comprenant une structure fibreuse, le procédé comprenant :
- le placement des deux parties dans un moule (404) avec un film (100) selon l'une quelconque des revendications 1 à 12 comme intermédiaire entre les deux parties ;
- la fermeture du moule ;
- l'injection d'un liquide durcissable (405) dans le moule ; et
- le durcissement du liquide durcissable qui a été injecté dans le moule.

14. Procédé selon la revendication 13 comprenant, avant d'injecter le liquide durcissable (405) dans le moule (404) :
- le traitement du film (100) selon l'une quelconque des revendications 1 à 12 afin que certaines des cavités (105-110) soient des cavités ouvertes et d'autres cavités soient des cavités fermées.

15. Structure à base de composite (500) comprenant deux parties qui ont été assemblées dans un processus de moulage composite liquide, au moins une des deux parties comprenant une structure fibreuse, la structure à base de composite comprenant un film (100) selon l'une des revendications 1 à 12 dans une couche de liaison entre les deux parties.
